# FASCICULE DE BREVET EUROPEEN

(11) **EP 1 503 112 B1**
(45) Date de publication et mention de la délivrance du brevet: **18.10.2006**
(21) Numéro de dépôt: 04300464.7
(22) Date de dépôt: 23.07.2004
(51) Int. Cl.: F16H 41/24

(54) **Bague d'adaptation moteur - boîte de vitesses pour véhicule à moteur**
Adapterring zwischen Motor und Getriebe eines Kraftfahrzeuzes
Adapter ring between motor and transmission of an automobil

(30) Priorité: 30.07.2003 FR 0309396
(43) Date de publication de la demande: 02.02.2005
(73) Titulaire: Renault s.a.s., 92100 Boulogne Billancourt (FR)
(72) Inventeur: Logez, Marc, 62160 Bully les Mines (FR)

(56) Documents cités:
- WO-A-98/34052
- DE-A- 10 115 629
- FR-A- 2 796 681
- FR-A- 2 807 799

## Description

L'invention concerne une bague d'adaptation entre un moteur et une boîte de vitesses, et plus particulièrement entre un élément centreur de boîte de vitesses et un vilebrequin de moteur, correspondant au préambule de la revendication 1.

Cet élément centreur consiste en un centreur solidaire du convertisseur de couple pour les boîtes de vitesses de type automatique ou à transmission à variation continue, ou en l'extrémité de l'arbre primaire pour les boîtes de vitesses manuelles. Il doit être positionné centré dans un alésage du vilebrequin mais doit pouvoir se déplacer légèrement en translation.

Actuellement, il existe une grande diversité de vilebrequins en fonction des types de moteur présentant des formes différentes, de sorte qu'il est nécessaire d'usiner un élément centreur spécifique pour chaque vilebrequin. En raison de cette diversité, un tel usinage génère des problèmes de flux de fabrication.

Le document WO 98/34052, qui est considéré comme l'état de la technique le plus proche, décrit un convertisseur de couple solidaire d'un centreur de convertisseur, lequel est positionné dans l'alésage d'un vilebrequin au moyen d'une pièce cylindrique en métal. Cette pièce présente un diamètre externe constant.

L'invention vise à pallier ces inconvénients en proposant une bague d'adaptation, de conception simple, permettant d'adapter directement l'élément centreur sur un vilebrequin sans avoir à réaliser d'opérations d'usinage sur l'un ou l'autre.

A cet effet, l'objet de l'invention concerne une bague d'adaptation d'un élément centreur de boîte de vitesses dans un vilebrequin de moteur, ledit élément centreur devant être centré et positionné dans le vilebrequin, ladite bague présentant au moins deux zones distinctes :
- une zone d'assemblage apte à être montée serrée dans un alésage du vilebrequin,
- une zone de positionnement de dimensions externes plus faibles que la zone d'assemblage apte à recevoir et maintenir en position l'élément centreur sans serrage.

Un jeu est ainsi créé entre la zone de positionnement et le vilebrequin du fait de la différence de dimensions externes des zones de positionnement et d'assemblage. Ce jeu permet d'éviter une déformation des dimensions internes de la bague au niveau de la zone de positionnement lors de l'assemblage de la bague. Un usinage ultérieur de l'élément centreur ou de la bague est ainsi évité.

Dans une variante, les zones d'assemblage et de positionnement sont disposées aux extrémités de la bague.

Dans une variante, la zone de positionnement s'étend sur une longueur correspondant sensiblement au débattement en translation de l'élément centreur suivant l'axe longitudinal de la bague. L'élément centreur reste ainsi toujours au niveau de cette zone une fois mis en place, et ne subit pas de contraintes.

Dans une variante, la zone d'assemblage présente des dimensions externes sensiblement égales aux dimensions internes de l'alésage du vilebrequin dans lequel elle peut être montée. La bague est alors emmanchée en force dans le vilebrequin.

Dans une variante, ses dimensions internes sont sensiblement égales ou très faiblement supérieures aux dimensions externes de l'élément centreur. Un jeu très faible facilite le montage et le fonctionnement de l'élément centreur dans la bague.

Dans une variante, l'extrémité opposée à la zone de positionnement présente un fond. Du fait de la séparation entre les zones de positionnement et d'assemblage, l'élément centreur ne pénètre pas dans la zone d'assemblage, de sorte qu'un espace est ménagé au niveau de cette zone permettant le stockage de la graisse. La présence d'un fond permet de contenir la graisse.

Plus particulièrement, le fond peut être percé d'un alésage, Ce dernier permet un démontage aisé d'une bague emmanchée, par exemple avec un outil de type arrache moyeu.

La bague selon l'invention peut être appliquée au centrage d'un centreur de convertisseur de couple d'une boîte de vitesses de type automatique ou à transmission à variation continue dans un vilebrequin. Elle peut également être appliquée au centrage d'un arbre primaire de boite de vitesses manuelle dans un vilebrequin.

Du fait de sa conception simple, elle peut être facilement usinée et utilisée pour des vilebrequins et boîtes de vitesses fabriquées en série. Il n'est plus nécessaire d'usiner ces dernières après fabrication avant de les assembler, il suffit de prévoir des bagues aux dimensions adaptées.

L'invention est maintenant décrite en référence aux dessins annexés, non limitatifs, dans lesquels:
- la figure 1 représente une vue en coupe d'un convertisseur de couple d'une boîte de vitesses positionné dans un vilebrequin au moyen d'une bague selon l'invention ;
- la figure 2 représente un agrandissement de la figure 1 montrant la bague emmanchée dans le vilebrequin, et l'élément centreur positionné dans la bague ;
- la figure 3 représente une vue agrandie en coupe d'une partie de la bague.

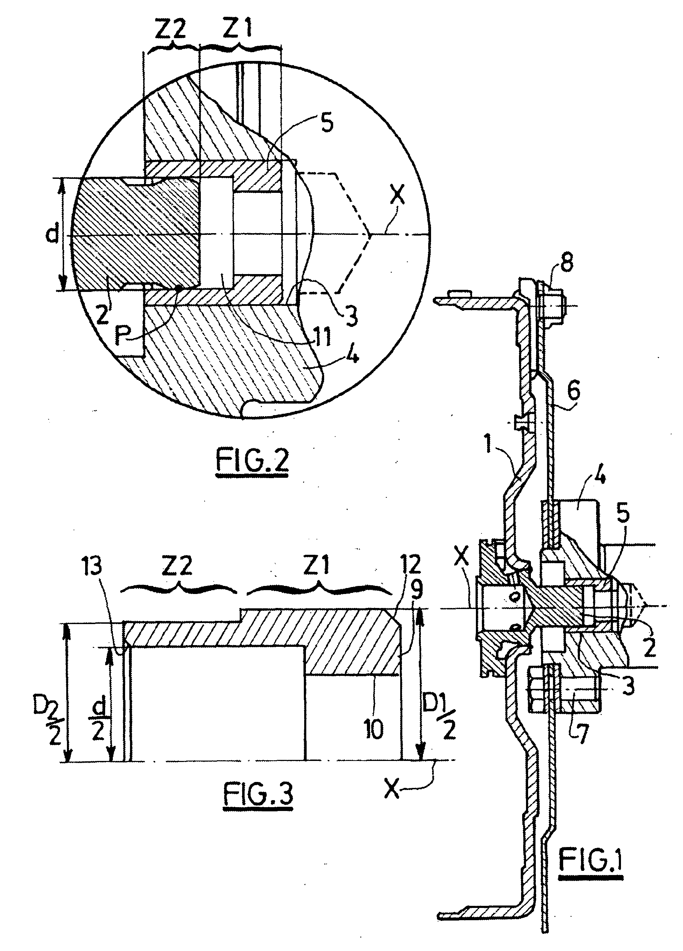

La bague selon l'invention est décrite en référence aux figures 1-3 pour une application pour une boîte de vitesses automatique comportant un convertisseur de couple.

La figure 1 représente un convertisseur de couple 1 solidaire d'un centreur de convertisseur 2 lequel est positionné dans l'alésage 3 d'un vilebrequin de moteur 4 au moyen d'une bague 5 selon l'invention. De manière classique, une tôle d'entraînement 6 est vissée sur le vilebrequin 4 par une vis 7, et solidarisée au convertisseur de couple 1 par des écrous 8.

La bague 5 présente une forme générale cylindrique creuse d'axe X, de diamètre interne d. Elle présente à une de ses extrémités une zone d'assemblage Z1 de diamètre externe D1, et à son autre extrémité, une zone de positionnement Z2 de diamètre externe D2 (figure 3).

Le diamètre interne d est choisi sensiblement égal au diamètre externe du centreur 2, de manière à ce que ce dernier, une fois en place, repose sensiblement en un point P sur la bague et puisse légèrement se déplacer en translation. Un jeu très faible peut être prévu entre le centreur et l'intérieur de la bague pour faciliter le montage.

Le diamètre externe D1 est légèrement supérieur au diamètre externe D2, et sensiblement égal au diamètre interne de l'alésage 3 du vilebrequin afin de permettre un emmanchement en force. Un jeu de dimension D1-D2 est créé entre l'alésage 3 du vilebrequin et la zone de positionnement Z2 de la bague évitant l'application de contraintes au niveau de la zone de positionnement, et donc la déformation de son diamètre interne d. Pour plus de clarté, ce jeu est exagéré sur la figure 3.

L'extrémité de la bague du côté de la zone d'assemblage Z1 est fermée par un fond 9, percé d'un alésage 10 de diamètre inférieur au diamètre d. Ce fond, dont l'épaisseur peut s'étendre sur une grande partie de la longueur de la zone d'assemblage Z1, permet de renforcer cette dernière.

Le montage de la bague 5 est réalisé de la manière suivante. La bague 5 est introduite dans l'alésage 3 du vilebrequin du côté de sa zone d'assemblage Z1. A cet effet, la bague peut être emmanchée sur un outil et introduite dans l'alésage 3, par exemple jusqu'à ce qu'elle soit complètement insérée dans celui-ci. Des butées prévues sur l'outil permettent par exemple d'obtenir l'enfoncement désiré de la bague dans l'alésage 3. L'outil est ensuite retiré, et le centreur 2 du convertisseur est introduit à l'intérieur de la bague 5. Cette étape ne nécessite pas d'usinage, les dimensions de la bague ayant été préservées lors du montage grâce au jeu entre la bague 5 et le vilebrequin 4.

L'introduction du centreur de convertisseur 2 dans la bague est limitée par la géométrie du convertisseur de couple 1 qui vient en butée contre la tôle d'entraînement 6 au niveau des écrous de fixation 8. A cet effet, la bague 5 est dimensionnée et positionnée de manière à ce que, une fois monté, le point d'appui P du centreur de convertisseur 2 sur la bague soit disposé au niveau de la zone de positionnement Z2 et puisse translater légèrement sans sortir de cette zone.

En général, un jeu (D1-D2) de 2 à 6 centièmes de millimétré est réalisé entre le vilebrequin 4 et la bague 5 au niveau de la zone de positionnement Z2. Les translations du centreur de convertisseur sont de l'ordre de ±2mm au niveau de son point de contact avec la bague 5. La longueur de la zone de positionnement Z2 doit donc être suffisante pour que ce déplacement se produise dans cette zone, et non dans la zone d'assemblage Z1, dans laquelle le diamètre interne d de la bague peut avoir été déformé sous l'effet de l'assemblage en force.

La cavité libre 11 créée au niveau de la zone d'assemblage Z1 entre l'extrémité du centreur de convertisseur 2 (qui, dans l'exemple, correspond sensiblement à la limite entre les zones de positionnement et d'assemblage) et le fond de la bague 9, permet un stockage de la graisse introduite lors de la mise en place du centreur.

Afin de faciliter l'introduction de la bague 5 dans le vilebrequin 4 et l'introduction du centreur 2 dans la bague, des chanfreins 12 et 13 peuvent être prévus aux extrémités de la bague respectivement sur les diamètres externe de la zone d'assemblage et interne de la zone de positionnement (figure 3).

L'exemple décrit concerne une boîte de vitesses automatique mais la bague peut être utilisée pour une boîte de vitesses manuelle, l'extrémité de l'arbre primaire de cette dernière étant alors positionné, de la même manière que le centreur, dans la bague au niveau de sa zone de positionnement.

Dans d'autres modes de réalisation non représentés, la zone d'assemblage Z1 peut être pourvue sur sa paroi externe de dents, d'un pas de vis, ou similaire, destinés à coopérer avec des moyens complémentaires du vilebrequin.

Enfin, les dimensions internes et externes de la bague peuvent varier et être facilement adaptées à différents vilebrequins et types de boîte de vitesses.

## Revendications

1. Bague d'adaptation (5) d'un élément centreur (2) de boîte de vitesses dans un vilebrequin de moteur (4), ledit élément centreur devant être centré et positionné dans le vilebrequin, **caractérisée en ce qu'**elle présente au moins deux zones distinctes :
- une zone d'assemblage (Z1) apte à être montée serrée dans un alésage du vilebrequin (3),
- une zone de positionnement (Z2) de dimensions externes plus faibles que la zone d'assemblage (Z1) apte à recevoir et maintenir en position l'élément centreur sans serrage.

2. Bague d'adaptation selon la revendication 1, **caractérisée en ce que** les zones d'assemblage (Z1) et de positionnement (Z2) sont disposées aux extrémités de la bague.

3. Bague d'adaptation selon la revendication 1 ou 2, **caractérisée en ce que** la zone de positionnement (Z2) s'étend sur une longueur correspondant sensiblement au débattement en translation de l'élément centreur suivant l'axe longitudinal de la bague.

4. Bague d'adaptation selon l'une des revendications 1 à 3, **caractérisée en ce que** la zone d'assemblage (Z1) présente des dimensions externes (D1) sensiblement égales aux dimensions internes de l'alésage du vilebrequin (3) dans lequel elle peut être emmanchée.

5. Bague d'adaptation selon l'une des revendications précédentes, **caractérisée en ce que** ses dimensions internes (d) sont sensiblement égales aux dimensions externes de l'élément centreur (3).

6. Bague d'adaptation selon l'une des revendications précédentes, **caractérisée en ce que** l'extrémité opposée à la zone de positionnement (Z2) présente un fond (9).

7. Bague d'adaptation selon la revendication 6, **caractérisée en ce que** ledit fond (9) est percé d'un alésage (10).

8. Application d'une bague selon l'une des revendications 1 à 7 au centrage d'un centreur (2) de convertisseur de couple (1) d'une boîte de vitesses de type automatique ou à transmission à variation continue dans un vilebrequin.

9. Application d'une bague selon l'une des revendications 1 à 7 au centrage d'un arbre primaire de boîte de vitesses manuelle dans un vilebrequin.

## Claims

1. Adapter ring (5) for fitting a gearbox centring element (2) into an engine crankshaft (4), the said centring element having to be centred and positioned in the crankshaft, **characterized in that** the adapter ring has at least two distinct regions:
- an assembly region (Z1) which can be mounted tightly in a bore of the crankshaft (3),
- a positioning region (Z2) which has smaller external dimensions than the assembly region (Z1) and can receive the centring element and maintain its position without clamping.

2. Adapter ring according to Claim 1, **characterized in that** the assembly (Z1) and positioning (Z2) regions are arranged at the ends of the ring.

3. Adapter ring according to Claim 1 or 2, **characterized in that** the positioning region (Z2) extends over a length corresponding substantially to the translational displacement of the centring element along the longitudinal axis of the ring.

4. Adapter ring according to one of Claims 1 to 3, **characterized in that** the assembly region (Z1) has external dimensions (D1) which are substantially equal to the internal dimensions of the bore (3) of the crankshaft in which it can be fitted.

5. Adapter ring according to one of the preceding claims, **characterized in that** its internal dimensions (d) are substantially equal to the external dimensions of the centring element (2).

6. Adapter ring according to one of the preceding claims, **characterized in that** the end opposite to the positioning region (Z2) has an end wall (9).

7. Adapter ring according to Claim 6, **characterized in that** the said end wall (9) has a bore (10) drilled through it.

8. Application of a ring according to one of Claims 1 to 7 to the centring of a centring element (2) of a torque converter (1) of a gearbox of the automatic or continuously variable transmission type in a crankshaft.

9. Application of a ring according to one of Claims 1 to 7 to the centring of an input shaft of a manual gearbox in a crankshaft.

## Patentansprüche

1. Adapterring (5) eines Zentrierelements (2) eines Getriebes in einer Motorkurbelwelle (4), wobei das Zentrierelement in der Kurbelwelle zentriert und positioniert werden muss, **dadurch gekennzeichnet, dass** er mindestens zwei getrennte Zonen aufweist:
- eine Montagezone (Z1), die fest in einer Bohrung der Kurbelwelle (3) montiert werden kann,
- eine Positionierzone (Z2) mit geringeren Außenabmessungen als die Montagezone (Z1), die das Zentrierelement ohne Festklemmen aufnehmen und in Position halten kann.

2. Adapterring nach Anspruch 1, **dadurch gekennzeichnet, dass** die Montage- (Z1) und Positionierzone (Z2) an den Enden des Ringes angeordnet sind.

3. Adapterring nach Anspruch 1 oder 2, **dadurch gekennzeichnet, dass** sich die Positionierzone (Z2) über eine Länge erstreckt, die im Wesentlichen dem Translationsausschlag des Zentrierelements entlang der Längsachse des Ringes entspricht.

4. Adapterring nach einem der Ansprüche 1 bis 3, **dadurch gekennzeichnet, dass** die Montagezone (Z1) Außenabmessungen (D1) aufweist, die im Wesentlichen gleich den Innenabmessungen der Kurbelwelle (3), in die sie gesteckt werden kann, sind.

5. Adapterring nach einem der vorhergehenden Ansprüche, **dadurch gekennzeichnet, dass** seine Innenabmessungen (d) im Wesentlichen gleich den Außenabmessungen des Zentrierelements (2) sind.

6. Adapterring nach einem der vorhergehenden Ansprüche, **dadurch gekennzeichnet, dass** das der Positionierzone (Z2) gegenüberliegende Ende einen Boden (9) besitzt.

7. Adapterring nach Anspruch 6, **dadurch gekennzeichnet, dass** der Boden (9) mit einer Bohrung (10) versehen ist.

8. Anwendung eines Ringes nach einem der Ansprüche 1 bis 7 zum Zentrieren eines Zentrierelements (2) eines Drehmomentwandlers (1) eines Getriebes automatischen Typs oder mit kontinuierlich variierendem Antrieb in einer Kurbelwelle.

9. Anwendung eines Ringes nach einem der Ansprüche 1 bis 7 zum Zentrieren einer Primärwelle eines Handgetriebes in einer Kurbelwelle.
